(19) Europäisches Patentamt
European Patent Office
Office européen des brevets

(11) Publication number: **0 295 442**
**A2**

# (12) EUROPEAN PATENT APPLICATION

(21) Application number: **88107897.6**

(51) Int. Cl.[4]: **A01N 43/54 , A01N 25/12**

(22) Date of filing: **18.05.88**

(30) Priority: **16.06.87 US 62667**

(43) Date of publication of application:
**21.12.88 Bulletin 88/51**

(84) Designated Contracting States:
**AT BE CH DE ES FR GB GR IT LI LU NL SE**

(71) Applicant: **AMERICAN CYANAMID COMPANY**
**1937 West Main Street P.O. Box 60**
**Stamford Connecticut 06904-0060(US)**

(72) Inventor: **Mehra, Yashpal R.**
**529 West Westfield Avenue**
**Roselle Park New Jersey(US)**

(74) Representative: **Wächtershäuser, Günter, Dr.**
**Tal 29**
**D-8000 München 2(DE)**

(54) **Bait compositions for the control of ants.**

(57) The invention is pesticidal bait compositions useful for the control of ants and method of controlling ants using the composition, wherein the bait may be cast into a solid shape and is non-particulating.

EP 0 295 442 A2

Xerox Copy Centre

## GRANULAR BAIL COMPOSITIONS FOR THE CONTROL OF ANTS

The present invention relates to solid, non-particulate, non-repellant bait compositions useful for the control of ants. Sugar and protein feeding containing tetrahydro-5, 5-dimethyl-2-(1H)-pyrimidione-{3-[4-(trifluoromethyl)phenyl]-1-{-2-[4-(trifluoro-methyl)phenyl]ethenyl}-2 -propenylidene}hydrazone or fatty acid salts thereof as the toxicant, or other suitable toxicants, and ground pupa of silkworm as the attractant. The insecticide is active as a stomach poison. The thereinabove named, toxicant can be graphically illustrated by formula (I)

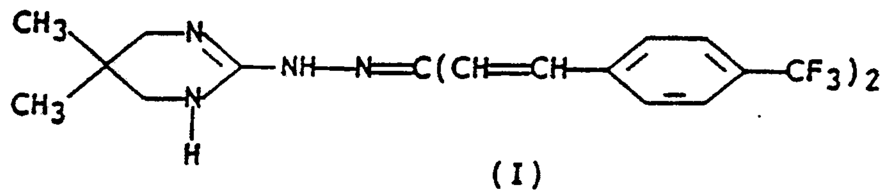

(I)

and the fatty acid salts thereof.

The insecticide is disclosed in United States Patent No. 4,163,102 and its method of use is disclosed in United States 4,213,988, all of which are incorporated herein by reference. Insecticidal bait compositions of the above-named insecticide are disclosed in United States Patent No. 4,320,130, which describes solid corn based baits which are suitable for applicants over large areas of the control of insects.

In previously filed, commonly assigned applications Serial Number 723,401, filed April 15,1985, now abandoned and refiled as Serial Number 839,774 on March 18,1986, issued as United States Patent Numbers 4,657,912, was disclosed and ant bait containing the above described toxicant, solid sugars, fish meal, silkworm pupae, a natural powder binder such as flour, and rice bran oil and oleic acid. This formulation suffered from certain physical problems. When it was poured into a bail tray and allowed to solidify, it dried out over a period of time, became crumbly and could be shaken out of the bait tray. This is a hazard to children and pets.

It is therefore an object of this invention to provide an antbait which has good coherency.

It is a further object of this invention to provide an antbait safe for use in bait trays in a household environment.

These and other objects of the invention will be become apparent as the description thereof proceeds.

The bait composition of the present invention thus comprises a granular blend of solid food attractants such as sugars, a protein such as dry, ground silkworm pupae, and fish meal held together by liquid sugars and synthetic polymeric binders, and also containing a suitable toxicant, such as described above in a suitable dispersant material. Other dried, ground insect material may also be used as protein material.

Ant bait compositions in the prior art have been either liquids , powders or granular materials which are unsafe in the presents of children and pets. The solid bait of the present invention makes it possible to place non-particulating bait in child resistant bait trays. The present bait remains moist at ambient temperatures. At high temperature and humidity conditions, the bait is capable of absorbing moisture without liquifying. Moreover, moist bait attracts ants and improves efficacy. Insecticide laden granules of food ingredients can be taken to the nest by worker ants and cause mortality of other workers and the queen, thus destroying the entire colony.

Among the species of ants which can be controlled by the bait of the present invention are the following, although this statement is not meant to limit effectiveness only to these.

| COMMON NAME | SCIENTIFIC NAME |
| --- | --- |
| Pharaoh ants | Monomorium pharaonis |
| Crazy ants | Paratrechina longicornis |
| Red imported fire ants | Solenopsis invicta |

| | |
|---|---|
| Black Carpenter ants | Campanotus pennsylvanica |
| Pavement ants | Tetramorium caespitum |
| Carpenter ants | Campanotus spp. |
| Argentine Ant | Iridomyrex numilis |
| Acrobat Ant | Crematoquaster , Sp |
| Thief Ant | Solenopsis molesta |
| Florida Carpenter Ant | Lasius alienus |
| Cornfield ants | Formica spp. |
| Field ants | Monomorium minimum |
| Little black ants | Tapinoma sessile |
| Odorous house ants | |

The composition may contain from 0.01% to 2% of the formula (I) insecticide and 10% to 40% dry pupa of silkworms, 15% to 50% fluid sugar, 5% to 15% fish meal.

A preferred embodiment of the invention also comprises a synthetic polymer binder, a fatty acid, an oil from grain or vegetable, e.g. ricebran, corn or soybean oil.

Representative components and amounts are as follows:

| | PREFERRED RANGE | BROAD RANGE | PREFERRED COMPOSITION |
|---|---|---|---|
| CORN SYRUP | 11.70-21.70 | 10.00-25.00 | 16.70 |
| MOLASSES | 5.00-15.00 | 5.00-25.00 | 10.00 |
| CARBOWAX 8000 | 0.00-14.00 | 0.00-15.00 | 9.00 |
| SILKWORM PUPAE | 30.00 | 10.00-40.00 | 30.00 |
| FISH MEAL | 10.00 | 5.00-15.00 | 10.00 |
| SUGAR | 20.00 | 5.00-30.00 | 20.00 |
| SODIUM SALICYLATE | 0.10 | 0.00-0.50 | 0.10 |
| t.BUTYLHYDROQUINNE | 0.20 | 0.00-0.50 | 0.20 |
| RICEBRAN OIL | 2.00 | 0.50-5.00 | 2.00 |
| OLEICACID | 1.00 | 0.50-5.00 | 1.00 |
| HYDRAMETHYLNON | 1.00 | 0.10-2.00 | 1.00 |

Antimicrobial agents such as sodium salicylate, sodium dehydroacetate and sodium benzoate may be added to inhibit microorganism growth, or antioxidants such as tert-butyl-hydroquinone, n-propyl gallate, 3-tert-butyl-4-hydroxy anisole, and butylated hydroxytoluene may be incorporated in the compositions to improve the storage characteristics of the final compositions.

## EXAMPLES 1-7

A number of formulations were prepared and tested to prove the coherency of the bait formulation of the present invention. These formulations are shown in the following Table I.

**TABLE I**

**FORMULATIONS TESTED TO PROVE NON-PARTICULATING BAIT BY THE USE OF A SIMULATED SHIP TEST.**

| | 1 | 2 | 3 | 4 | 5 | 6 | 7 |
|---|---|---|---|---|---|---|---|
| CORNSYRUP | 16.70 | 11.70 | 21.70 | 16.70 | 21.70 | 11.70 | 16.70 |
| MOLASSES | 10.00 | 15.00 | 5.00 | 14.00 | 14.00 | 10.00 | 5.00 |
| CARBOWAX 8000 | 9.00 | 9.00 | 9.00 | 5.00 | | 14.00 | 14.00 |
| SILKWORM PUPAE | 30.00 | | | | | | |
| FISH MEAL | 10.00 | | | | | | |
| SUGAR | 20.00 | | | | | | |
| SODIUM SALICYLATE | 0.10 | | | | | | |
| t.-HQ | 0.20 | | | | | | |
| RICEBRAN OIL | 2.00 | | | | | | |
| OLEIC ACID | 1.00 | | | | | | |
| HYDRAMETHYLNON | 1.00 | | | | | | |

Corn syrup is a source of sugar and also used as binder. Other sugars can also be used such as glucose, fructose, sucrose, etc. Molasses is also a sugar source and binder. This also serves as a mask for the odor of fish meal and silkworm pupae. Carbowax 8000 is used as a binder. Other polyethylene glycols can also be used. Silkworm pupae and Fish meal are used as a source of protein, for protein feeding ants. Other types of dried, ground insects can also be used as a protein source. Sugar is granular sucrose, a disaccharide. The combination of corn syrup, molasses and sugar also controls the moisture content of the bait. This keeps the bait moist at all times. Sodium salicylate is a preservative. Other preservatives can also be used. Examples are Sodium benzoate, sodium citrate, Dowcil 200, Vancide 80RE, Tektamer 38AD, etc. Tertiary T.butylhydroquinone (t.BHQ) is used as a anti-oxidant for the ricebran oil. Other anti-oxidants are butylhydroxy anisole, propyl gallete, etc. Rice Bran oil and Oleic acid are the solubilizers for the active Hydramethylnon. One can also use soya bean oil, peanut oil, corn oil, etc. as a substitute for rice bran oil. Oleic acid can be replaced by stearic acid, palmitic acid, etc. Hydramethylnon is the active ingredient. Other active's such as Dursban, Temephos, Baygon, etc can also be used.

The formulation of Examples 1 through 7 were produced as follows:

## MANUFACTURING PROCEDURE

PHASE A

1. Charge the batch tank with CORN SYRUP. Begin moderate agitation.
2. Begin heating the phase to 55° ± 2° C.
3. While heating add MOLASSES and POLYETHYLENE GLYCOL 8000. Continue to mix until POLYETHYLENE GLYCOL 8000 is melted and batch is uniform.
4. Maintain 55° ± 2° C temperature and moderate agitation.

PHASE B

1. Charge the side kettle with RICE BRAN OIL and OLEIC ACID.
2. Begin moderate agitation and begin heating to temperature 75°-80°C.
3. Maintain the temperature and moderate agitation.
4. Sprinkle in HYDRAMETHYLNON. Continue moderate mixing until batch is clear and uniform.
5. Turn off heat.

PHASE C

1. Dry blend SILKWORM PUPAE, FISHMEAL, SUCROSE, SODIUM SALICYATE and t.BUTYLHYDROQUINONE until uniform.

MIXING PHASES

1. Turn off heat to PHASE A.
2. With continued moderate mixing, add PHASE B to PHASE A. Mix until uniform.
3. Add PHASE C and increase agitation speed as necessary to insure uniform mixture.

EXAMPLE 8

This example illustrates results of actual and simulated shipping tests of the formulation of the present invention and that of U.S. Patent Number 4,657,912.

The bait formulations of Examples 1 to 7 were poured into plastic bait trays and allowed to solidify to form ant bait feeding stations. Five cases of each formulation were packed (120 individual bait trays per case).

Testing was performed according to the "Pre-Shipment Test Procedures," Revised 1979 National Safe Transit Association, 6022 W. Touhy Avenue, Chicago, Illinois protocol.

The testing consisted of both vibration and drop tests as follows:

Vibration test - Test equipment complying with ASTM D-999. A total of 14,200 vibrating impacts.

Drop test - Test equipment complying with ASTM D-775 and D-880; and TAPP1 T-801 and T-802. Each carton dropped on each of its six flat surfaces from a height of 30 inches.

The results are shown in Table II.

**TABLE II**

| FORMULA CODE: | LOOSENED BAITS (individually | % : |
|---|---|---|
| 1 | 2 | 1.66 |
| 2 | 4 | 3.33 |
| 3 | 1 | 0.63 |
| 4 | 1 | 0.82 |
| 5 | 0 | 0.00 |
| 6 | 13 | 10.88 |
| 7 | 1 | 0.88 |
| CONTROL | 0 | 0.00 |

New formulations, except F, compare closely to the control samples.

In comparison, cases of bait trays containing bait according to U.S. patent Number 4,657,912 were actually shipped between New Jersey and California. The bait was nearly 100% shaken out of the Trays by this shipment.

EXAMPLE 9

EFFICACY OF MFB# 17750 AGAINST HOUSEHOLD ANTS

## Summary

Field trials were conducted to determine the efficacy of mfb# 17750 against several species of household ants. Bait acceptance and toxicity were demonstrated by these field tests. In field trials MFB# 17750 was extremely effective in controlling the Pharaohs ants, Monomorium pharoonis; Argentine ant, Iridomyrex humilis; Red imported fire ant, Solenopis invicta; Crazy ants, Paratrechina longicornies; Acrobat ant, Crematogaster sp. and was moderately effective against Black carpenter ants, Camponotus pennsylvanicus; Pavement ants, Tetramorium casepitum; Cornfield ants, Lasius Alienus; Odorous house ant, Tapinoma sessile; Thief ants, solenopsis molesta; Florida carpenter ant and carpenter ant.

## Materials and Methods

The efficacy and acceptability of MFB# 17750 was determined against 12 ant species occurring in a diversity of habitats. Most of the sites selected were in or around human dwellings where ants were considered a nuisance. In the case of Pharaohs ants, a test was conducted in a hospital situation where it is a health hazard. Since the colony nucleus was hidden within the structure, assessment of bait effectiveness was accomplished by counting the number of ants trapped in a jar containing a sweet prebait and post counts done with ants around the bait at specified time intervals.

Some studies were done with a improved alternate pre and post count technique. Zero time counts and subsequent counts were done as follows: A point of the ant trail near the food source was used as a mark - counts were made of the number of ants passing that point, going toward the food source only, for three one minute intervals. Observations were made for reduced ant activity and in some cases feeding activity was also detected.

## Results

Results of field experiments are summarized below and in Table III.

Monomorium pharoonis was effectively controlled by MFB# 17750 at 8 different locations. Ant activity around the bait was as soon as 16 minutes after placement of bait. Ants preferred the bait even in presence of other food sources. No reduction or feeding observed at the ninth location is puzzling. More then 80% reduction was observed after a week of treatment.

Excellent control was obtained for Solenopsis invicta. Feeding activity and high consumption of bait was observed. 100% control after a week of treatment.

Paratrechnia longicornies foraged on bait throughout the test. In one week 69% reduction was observed after a week whereas in the other test 84% reduction was obtained after 3 weeks. Thus, excellent control was achieved.

Iridomyrex humilis consumed all the bait in 5 days and reduction of 60% was observed. Ant feeding was observed after a hour of bait placement.

Camponotus pensylvanicus responded positively to the bait at all the 6 sites. Ants were observed feeding on bait, dead and ataxic ants were noticed 3 to 4 days after bait placement. No ants were seen after 2 weeks at all treatment sites.

Excellent control (100%) was obtained for Crematogaster sp.. Ant feed on bait within a hour and no ant activity after 5 days.

Within a hour of placement of bait Tapinoma sessile fed on the bait and 5 days later no ant activity was observed. Similar results were observed for Solenopsis molesta.

Satisfactory control was also obtained for Tetramorium caespitum and Lasium alienus. In both cases feeding and dead ants were observed. No ants observed after a week of bait placement.

## Discussion and Conclusions

Ant feeding habits overall are extremely diverse, and even within species food preference can vary from season to season, or even hour to hour, depending on colony requirements. Such selectivity complicates the use of a universal toxic food bait for general ant control.

Measurement to field effectiveness is also complicated by difficulties in measuring true mortality. Frequently, colonies under test cannot be excavated for true population counts, and the best available measurement is a relative one based on comparisons of foraging activity before and after bait placement. Such an approach, however, is realistic from the standpoint of how consumers perceive effectiveness.

Accordingly, the activity of MFB# 17750 against household ants varied with both species and location. Monomorium pharoonis a major household and institutional pest was effectively eliminated in all areas where the bait was placed. In one location a seven year history of infestation was eliminated. This site had earlier been treated with all available products. Excellent control was also obtained for Solenopsis invicta, Paratrechina longicornies, Iridomyrex humilis, Tapinoma sessile, Solenopsis molesta, Creamatogaster sp., Camponotus pensylvanicus, Tetramorium casepitum, lasius alienus, and two other species of Camponotus.

The time lag between bait placement and effect appear to depend on colony size and availability of other food sources. Effects observed in tests with MFB# 17750 were delayed 2-7 days. In certain instances, tests were not carried to 100% reduction due to sites being unavailable to cooperators.

MFB# 17750 contains Hydramethylnon as the active ingredient. This active is regarded as a non-repellent (as a result of its slow action) which is ideal for use in baits for social insects. The repellency and rapid knockdown of other bait products gives the consumer perceived efficacy. Ants contacting such baits are killed quickly thereby precluding recruitment from the colony. The remaining ants subsequently disperse from the treated areas. The presence of a few dead workers and the disappearance of the remaining ants given the perception that these baits are effective.

TABLE III

FIELD EVALUATION OF MFB# 17750

| ANT SPECIES | LOCATION | FEEDING ACTIVITY OBSERVED | MORTALITY OBSERVED | ANT ACTIVITY FOLLOWING BAIT PLACEMENT |
|---|---|---|---|---|
| Pharaoh Ant (Monomorium pharoonis) | Gainesville, FL House, outside walls & porches | YES | 9 stations<br>DAY # ANTS % RED.<br>0 757<br>7 0 100 | Trail to bait 16 min later. 24 hrs later 8 of 9 baits had trails. |
| | Gainesville, FL House outside walls | YES | 12 stations<br>DAY # ANTS % RED.<br>0 1404<br>7 27 98<br>21 0 100 | Swarmed in great numbers, no visible ants after 1 week. |
| | Baton Rouge, LA House, inside all around the house | YES | 14 stations<br>DAY # ANTS % RED.<br>0 1140<br>7 11 99<br>14 0 100 | Few ants after one week. |
| | Pt. Huenene, CA* Apt. Bldg. inside, 28 apts. treated | YES | 6 stations/apt. average reduction of 87.6% after 4 weeks | After 4 weeks 3 apts with more than 2 ants and 6 with less than 2 ants. |
| | Los Angles, CA Apt. Bldg. 8 apts, laundry room,inside | YES | 6 stations<br>DAY % RED.<br>7 80<br>40 100 | |
| | Pt. Huenene, CA Duplex | YES | 6 stations | Ant activity reduced |
| | Gainesville, FL Hospital Burn Ward, inside | YES | 4 stations**<br>TIME COUNT % RED.<br>0 26.7<br>1 hr 103.7<br>24 hr 13.0 87.5<br>1 wk. 0 100 | Ant trails observed to the bait. Alternate food was blood, serum, etc. |
| | Gainesville, FL Histology Lab, inside | YES | [illegible] stations**<br>TIME COUNT %RED.<br>0 15.4<br>1 hr 30<br>24 hr 14.6 51.3<br>1 wk 6 80 | |

| | | | | |
|---|---|---|---|---|
| | Gainesville, FL<br>Neonatal ICU,<br>inside | NO | 4 stations**<br>TIME COUNT %RED.<br>0 11.6<br>1 hr 5.3<br>24 hr 7.7<br>1 wk 17.1 | 1 hr reduction due to ants hesitation to enter station. No feeding activity observed No reduction in ants. |
| Crazy Ant (<u>Paratrechina longicornies</u>) | Gainesville, FL<br>house, outside walls | YES | 12 stations<br>DAY # ANTS % RED.<br>0 249<br>7 77 69 | Ants foraged on bait throuhgout the test |
| | Gainesville, FL<br>house, outside walls & porches | YES | 11 stations<br>DAY # ANTS % RED.<br>0 175<br>7 75 57<br>21 28 84 | Ants foraged on bait throughout the test |
| Red Imported Fire Ant (<u>Solenopsis invicta</u>) | Gainesville, FL<br>Townhouse, dresser, bathroom & porch | YES | 3 stations<br>DAY # ANTS % RED.<br>0 132<br>7 0 100 | Ants swarmed the baits. No ants after 2 days |
| | Auburn, AL<br>outside | YES | 2 stations<br>5 days, 40% reduction. | Ants foraged on bait after 5 mins. |
| | Gainesville, FL<br>Hospital, Patient room | YES | 2 stations**<br>TIME COUNT %RED.<br>0 54.7<br>1 hr 45.3 17.3<br>24 hr 21.3 61.1<br>1 wk 0 100 | 48 hrs later the baits used up. No ant activity after 48 hrs. |
| | Gainesville, FL<br>House, patio, closets, bathroom, bedroom floor | YES | 7 stations**<br>TIME COUNT %RED<br>0 61<br>7 0 100 | Ants fed on all but 1 station. 3 on patio empty on day 4. One in closet practically empty. |
| Argentine Ant (<u>Iridomyrmex humilis</u>) | Auburn, AL<br>outside | YES | 2 stations<br>5 days, 60% reduction. | Ants feeding on bait in 1 hr. Total bait consumed. |
| Odorous House Ant (<u>Tapinoma sessile</u>) | Auburn, AL<br>House, inside | YES | 2 stations<br>5 days, 100% reduction. | Ants feed on bait within a hour. |
| Thief Ant (<u>Solenopsis molesta</u>) | Auburn, AL<br>House, inside & outside | YES | 2 stations<br>5 days, 100 reduction. | Ants foraged on bait in a hour. |

| | | | | |
|---|---|---|---|---|
| Acrobat Ant (*Crematogaster* sp.) | Auburn, AL outside | YES | 2 stations 5 days, 100 reduction. | Ants feed on bait within a hour. |
| Florida Carpenter Ant | Gainesville, FL Entomology lab | YES | 3 stations**<br>TIME COUNT %RED<br>0 18.7<br>4 hr 12.6 32.6<br>24 hr 1.6 91.4<br>1 wk 2.3 87.7 | Ants fed for 2-3 days only. Colony in next room died two weeks later. |
| Black Carpenter Ant (*Camponotus pensylvanicus*) | W. Milford, NJ House | YES | 3 stations Yes | Pretreat: 10-15 ants observed daily. Post treat: dead ants observed daily. |
| | E. Windsor, NJ House | NO | 3 stations No | Pretreat: 6-8 ants. Bait consumed and ant activity reduced in 3-4 days. |
| | Oakland, NJ House | NO | 3 stations No | Pretreat: 6-8 ants. Ants gone 3-4 days after bait placement. |
| | Waldwick, NJ House | NO | 3 stations Yes | Pretreat:15-20 ants daily. Post treat: staggering ants around station. |
| | Lodi, NJ Two family home | NO | 3 stations No | Pretreat:10-15 ants. No ants after two weeks of bait placement. |
| | W. Milford, NJ House | YES | 3 stations No | Pretreat: 20-30 ants. Ants seen entering station. Noticeable reductions. |
| Carpenter Ant | Wyckoff, NJ House | NO | 3 stations No | Pretreat: 6-7 ants. Noticeable reduction after bait placement. |
| | Allendale, NJ House | YES | 3 stations YES | Pretreat: 10-12 ants. Trail formed after bait placement. Staggering ants observed. |

| | | | | |
|---|---|---|---|---|
| Pavement Ant (*Tetramorium caespitum*) | E. Windsor, NJ House | NO | 3 stations | Pretreat:100 plus ants. No activity after 3-4 days of bait placement. |
| | Glenwood, NJ House | YES | 3 stations Yes | Pretreat: 75-100 ants. Trail formed after bait placement No ants after one week. |
| | Allendale, NJ House | YES | 3 stations Yes | Pretreat: 40-50 ants. Trail and dead ants after bait placement. |
| Cornfield Ant *Lasius alienus* | Elmwood Park, NJ House | NO | 3 stations | Pretreat: 10-15 ants. No ant activity after one week of bait placement. |
| | Allendale, NJ House | YES | 3 stations Yes | Pretreat: 40-50 ants. Noticeable reduction in activity after bait placement. |

* 7 year history of infestation, had been treated with all available product with little success.

** Zero time counts and subsequents counts were done as follows: A point on the ant trail near the food source was used as mark - counts were made of the numbers of ants passing that point, going toward the food source only, for three one minute intervals.

## Claims

1. A non-particulating insecticidal bait composition comprising a toxicant, a liquid sugar, a dried, ground protein composition, and a polymeric binder.

2. The Composition of claim 1 wherein said protein composition is dried , ground silk worm pupa or fish meal, or a mixture thereof.

3. The composition of claim 2 comprising in addition a vegetable or grain oil.

4. The composition according of claim 1 wherein said toxicant is pyrimidinone-{3-[4-trifluoromethyl)-phenyl]-1{2-[4-(tri-fluoromethyl)-phenyl]ethenyl{-2propenylidene}hydrazone having the formula (I)

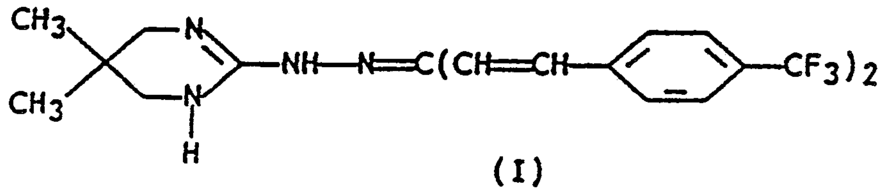

(I)

or a fatty acid salt thereof.

5. The composition of claim 4 wherein said protein composition is dried, ground silkworm pupa or fishmeal, or a mixture thereof.

6. The composition of claim 5 containing in addition a vegetable or grain oil.